# EUROPEAN PATENT APPLICATION

(11) **EP 4 492 890 A1**
(43) Date of publication of application: **15.01.2025**
(21) Application number: 22930224.5
(22) Date of filing: 07.03.2022
(51) Int. Cl.: H04W 72/04, H04W 72/12, H04L 5/14

(54) **GUARD TIME INTERVAL DETERMINATION METHOD AND APPARATUS, AND GUARD TIME INTERVAL INDICATION METHOD AND APPARATUS**

(71) Applicant: Beijing Xiaomi Mobile Software Co., Ltd., Beijing 100085 (CN)
(72) Inventor: ZHU, Yajun, Beijing 100085 (CN)
(74) Representative: Dehns Germany Partnerschaft mbB
(86) International application number: PCT/CN2022/079617
(87) International publication number: WO 2023/168578

(57) **Abstract**

The present disclosure provides a guard period determination method and apparatus, and a guard period indication method and apparatus. The guard period determination method includes: determining a time domain range corresponding to an uplink subband for uplink transmission in downlink slots; and determining, based on indication information transmitted by a network device, a guard period before or in the time domain range. According to the embodiments of the present disclosure, the terminal can determine the time domain range, configured by the network device, corresponding to the uplink subband for uplink transmission in downlink slots, and determine, based on the indication information transmitted by the network device, the guard period before or in the time domain range. The terminal does not expect to receive downlink data and does not transmit uplink data in the guard period, but may instead perform the switching from downlink reception to uplink transmission, so as to ensure that the terminal has completed the switching by the time the terminal needs to perform the uplink transmission, so that the terminal can perform the uplink transmission in a timely manner, and interference with the uplink transmission caused by the occurrence of a delay in the uplink transmission is avoided.

## Description

### TECHNICAL FIELD

The present disclosure relates to the field of communication technologies, and in particular to a guard period determination method, a guard period determination apparatus, a guard period indication method, a guard period indication apparatus, a communication device and a computer-readable storage medium.

### BACKGROUND

For a communication process between a terminal and a base station, in order to enable the terminal to support duplex communication, the base station may configure for the terminal an uplink (UL) subband for uplink data transmission in downlink (DL) slots, and may schedule uplink data transmission of the terminal in a time domain range corresponding to the UL subband. In at least one DL slot in which the UL subband is located, the terminal can also perform downlink data reception, so that duplex communication can be realized. However, the duplex communication based on the current way of configuring resources for the terminal has an impact on the communication effect.

### SUMMARY

To overcome the problems in the related arts, embodiments of the present disclosure provide a guard period determination method, a guard period determination apparatus, a guard period indication method, a guard period indication apparatus, a communication device and a computer-readable storage medium.

According to a first aspect of the embodiments of the present disclosure, there is provided a guard period determination method, performed by a terminal, and including: determining a time domain range corresponding to an uplink subband for uplink transmission in downlink slots; and determining, based on indication information transmitted by a network device, a guard period before or in the time domain range.

According to a second aspect of the embodiments of the present disclosure, there is provided a guard period indication method, performed by a network device, and including: determining a time domain range, configured for a terminal, corresponding to an uplink subband for uplink transmission in downlink slots; and transmitting indication information to the terminal, where the indication information is configured to instruct the terminal to determine a guard period before or in the time domain range.

According to a third aspect of the embodiments of the present disclosure, there is provided a guard period determination apparatus, being applicable to a terminal, and including: a range determination module, configured to determine a time domain range corresponding to an uplink subband for uplink transmission in downlink slots; and a period determination module, configured to determine, based on indication information transmitted by a network device, a guard period before or in the time domain range.

According to a fourth aspect of the embodiments of the present disclosure, there is provided a guard period indication apparatus, being applicable to a network device, and including: a range determination module, configured to determine a time domain range, configured for a terminal, corresponding to an uplink subband for uplink transmission in downlink slots; and a period indication module, configured to transmit indication information to the terminal, where the indication information is configured to instruct the terminal to determine a guard period before or in the time domain range.

According to a fifth aspect of the embodiments of the present disclosure, there is provided a communication device, including: a processor; and a memory storing computer programs, where the computer programs, when executed by the processor, cause the processor to perform the above-mentioned guard period determination method.

According to a sixth aspect of the embodiments of the present disclosure, there is provided a communication device, including: a processor; and a memory storing computer programs, where the computer programs, when executed by the processor, cause the processor to perform the above-mentioned guard period indication method.

According to a seventh aspect of the embodiments of the present disclosure, there is provided a computer-readable storage medium, storing computer programs thereon, where the computer programs, when executed by a processor, cause the processor to perform the above-mentioned guard period determination method.

According to an eighth aspect of the embodiments of the present disclosure, there is provided a computer-readable storage medium, storing computer programs thereon, where the computer programs, when executed by a processor, cause the processor to perform the above-mentioned guard period indication method.

According to the embodiments of the present disclosure, the terminal can determine the time domain range, configured by the network device, corresponding to the uplink subband for uplink transmission in downlink slots, and determine, based on the indication information transmitted by the network device, the guard period before or in the time domain range. The terminal does not expect to receive downlink data and does not transmit uplink data in the guard period, but may instead perform the switching from downlink reception to uplink transmission, so as to ensure that the terminal has completed the switching by the time the terminal needs to perform the uplink transmission, so that the terminal can perform the uplink transmission in a timely manner, and interference with the uplink transmission caused by the occurrence of a delay in the uplink transmission is avoided.

### BRIEF DESCRIPTION OF THE DRAWINGS

To describe the technical solutions of the embodiments of the present disclosure more clearly, the following briefly introduces the accompanying drawings required for describing the embodiments. Apparently, the accompanying drawings in the following description show only some embodiments of the present disclosure, and a person of ordinary skill in the art may still derive other drawings from these accompanying drawings without inventive efforts.
FIG. 1 is a schematic flowchart illustrating a guard period determination method according to an embodiment of the present disclosure.
FIGS. 2A to 2C are schematic diagrams illustrating several uplink subbands according to embodiments of the present disclosure.
FIG. 3 is a schematic flowchart illustrating a guard period determination method according to another embodiment of the present disclosure.
FIG. 4 is a schematic diagram illustrating a guard period according to an embodiment of the present disclosure.
FIG. 5 is a schematic flowchart illustrating a guard period determination method according to yet another embodiment of the present disclosure.
FIG. 6 is a schematic diagram illustrating a guard period according to another embodiment of the present disclosure.
FIG. 7 is a schematic flowchart illustrating a guard period determination method according to still another embodiment of the present disclosure.
FIG. 8 is a schematic flowchart illustrating a guard period determination method according to still another embodiment of the present disclosure.
FIG. 9 is a schematic diagram illustrating a guard period according to yet another embodiment of the present disclosure.
FIG. 10 is a schematic diagram illustrating a guard period according to still another embodiment of the present disclosure.
FIG. 11 is a schematic flowchart illustrating a guard period indication method according to an embodiment of the present disclosure.
FIG. 12 is a schematic block diagram illustrating a guard period determination apparatus according to an embodiment of the present disclosure.
FIG. 13 is a schematic block diagram illustrating a guard period indication apparatus according to an embodiment of the present disclosure.
FIG. 14 is a schematic block diagram illustrating a device for indicating a guard period according to an embodiment of the present disclosure.
FIG. 15 is a schematic block diagram illustrating a device for determining a guard period according to an embodiment of the present disclosure.

### DETAILED DESCRIPTION OF THE EMBODIMENTS

The following clearly and completely describes the technical solutions in the embodiments of the present disclosure with reference to the accompanying drawings in the embodiments of the present disclosure. Apparently, the described embodiments are some of the embodiments of the present disclosure rather than all of the embodiments. All other embodiments obtained by a person of ordinary skill in the art based on the embodiments of the present disclosure without creative efforts shall fall within the protection scope of the present disclosure.

The terms used in the present disclosure are for the purpose of describing a particular example only, and are not intended to limit the present disclosure. The singular forms such as "a," "said," and "the" used in the present disclosure and the appended claims are also intended to include multiple, unless the context clearly indicates otherwise. It will also be understood that as used herein, the term "and/or" is and includes any or all combinations of one or more of the associated listed items.

It is to be understood that although different information may be described using the terms such as "first," "second," "third," etc. in the present disclosure, the information should not be limited to these terms. These terms are used only to distinguish the same type of information from each other. For example, the first information may also be referred to as the second information without departing from the scope of the present disclosure, and similarly, the second information may also be referred to as the first information. Depending on the context, as used herein, the wording "if" may be interpreted as "while ..." or "when ..." or "in response to a determination".

For purposes of brevity and ease of understanding, the wordings "greater than" or "less than", "higher than" or "lower than" are used herein to characterize size relationships. However, for those skilled in the art, it will be understood that the wording "greater than" covers the meaning of "greater than or equal to", and the wording "less than" covers the meaning of "less than or equal to". The wording "higher than" covers the meaning of "higher than or equal to", and the wording "lower than" covers the meaning of "lower than or equal to".

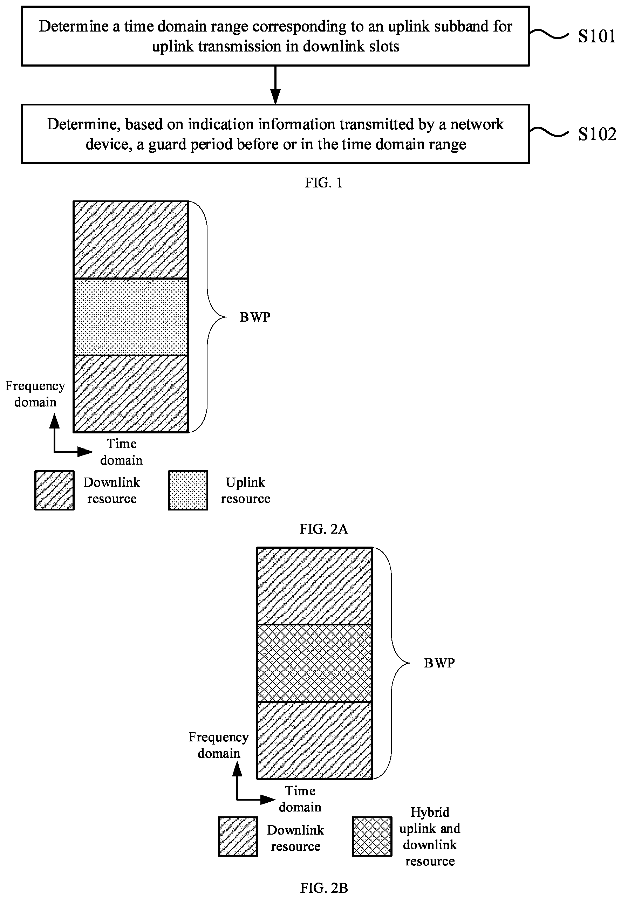

FIG. 1 is a schematic flowchart illustrating a guard period determination method according to an embodiment of the present disclosure. The guard period determination method in this embodiment can be applied to a terminal. The terminal includes, but is not limited to a mobile phone, a tablet computer, a wearable device, a sensor, an Internet of Things (IoT) device (such as narrow band Internet of Things (NB-IoT), machine type communication (MTC), enhanced machine type communication (eMTC) and other communication devices. The terminal may communicate with a network device. The network device includes, but is not limited to a network device (such as a base station, a core network, and the like) in a communication system such as a 4th generation (4G) communication system, 5G communication system, 6G communication system, etc.

As shown in FIG. 1, the guard period determination method may include the following steps S101 and S102.

At step S101, a time domain range corresponding to an uplink (UL) subband for uplink transmission in downlink (DL) slots is determined.

At step S102, based on indication information transmitted by a network device, a guard period is determined before or in the time domain range.

In an embodiment, duplex communication may be performed between the terminal and the network device, for example, full duplex communication may be performed, or half duplex communication may be performed.

The network device can configure the DL slot for the terminal, and a frequency domain resource corresponding to the DL slot can include a frequency band or one or more bandwidth parts (BWPs) in a frequency band.

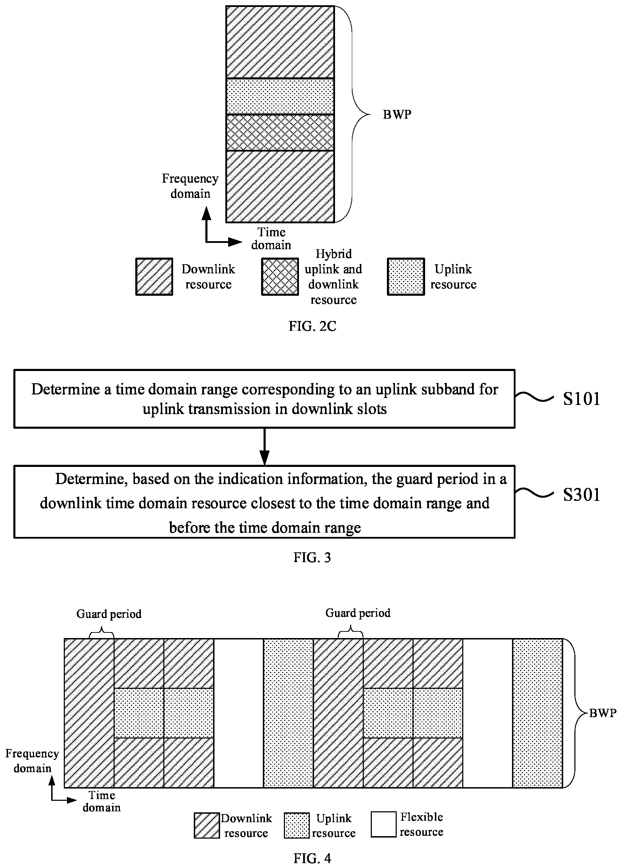

FIGS. 2A to 2C are schematic diagrams illustrating several uplink subbands according to embodiments of the present disclosure.

For example, the frequency domain resource corresponding to the DL slot includes a BWP.

In an embodiment, as shown in FIG. 2A, in the DL slot, the frequency domain resource corresponding to the uplink subband does not overlap with the frequency domain resource used for downlink reception.

In an embodiment, as shown in FIG. 2A, in the DL slot, the frequency domain resource corresponding to the uplink subband fully overlaps with the frequency domain resource used for downlink reception.

In an embodiment, as shown in FIG. 2A, in the DL slot, the frequency domain resource corresponding to the uplink subband partially overlaps with the frequency domain resource used for downlink reception.

The following embodiments are mainly illustrated in the case of the UL subband shown in FIG. 2A.

In an embodiment, the DL slot configured by the network device to the terminal may be a plurality of consecutive DL slots, some of the plurality of consecutive DL slots may be configured with a UL subband, so that there is a downlink time domain resource for downlink data reception before the time domain range corresponding to the UL subband. The time domain range corresponding to the UL subband includes some or all of the time domain symbols in at least one DL slot.

For example, the time domain range corresponding to the UL subband starts from a first time domain symbol in a n-th (n is a positive integer) DL slot, and the time domain resource before the time domain range corresponding to the UL subband includes a (n-1)-th DL slot.

For example, the time domain range corresponding to the UL subband starts from a fifth time domain symbol in the n-th DL slot, and the time domain resource before the time domain range corresponding to the UL subband includes the first four time domain symbols in the n-th DL slot.

The time domain symbol is an orthogonal frequency division multiplexing (OFDM) symbol.

However, the terminal needs some time to switch the radio frequency (RF) device when switching from downlink reception to uplink transmission, otherwise it will bring interference to the uplink transmission. For example, the uplink transmission is performed after the downlink reception in the downlink time domain resource, if the switching of the RF device is not completed when the uplink transmission is required, the switching still needs to be completed before the terminal can perform the uplink transmission, which results in a delay in the timing of the uplink transmission, and thus causes interference to the uplink transmission.

According to the embodiments of the present disclosure, the terminal can determine the time domain range, configured by the network device, corresponding to the uplink subband for uplink transmission in downlink slots, and determine, based on the indication information transmitted by the network device, the guard period before or in the time domain range. The terminal does not expect to receive downlink data and does not transmit uplink data in the guard period, but may instead perform the switching from downlink reception to uplink transmission, so as to ensure that the terminal has completed the switching by the time the terminal needs to perform the uplink transmission, so that the terminal can perform the uplink transmission in a timely manner, and interference with the uplink transmission caused by the occurrence of a delay in the uplink transmission is avoided.

It is to be noted that the indication information of the network device is known to both the network device and the terminal, so that the terminal does not expect to receive downlink data and does not transmit uplink data in the guard period, and the network device does not expect to receive uplink data transmitted by the terminal and does not transmit downlink data to the terminal in the guard period. But the network device may receive uplink data transmitted by other terminals or transmit downlink data to other terminals in the guard period.

In an embodiment, the guard period is for the terminal to switch from downlink reception to uplink transmission. For example, the terminal may switch the RF device from being used for downlink reception to being used for uplink transmission in the guard period. However, it is to be noted that the operation performed by the terminal in the guard period is not limited to the switching from downlink to uplink, but other operations may be performed as required, such as performing operations such as compensating for the transmission delay (e.g., a delay from transmitting a signal by the network device to the reception of the signal by the terminal) between the network device and the terminal, performing timing synchronization, and the like.

In addition, it is to be noted that the UL subband applicable to the embodiments of the present disclosure includes an UL subband after a DL slot and adjacent to the DL slot, or an UL subband after a DL symbol and adjacent to the DL symbol. This is because the need to set the guard period is only necessary for the UL subband in this case.

FIG. 3 is a schematic flowchart illustrating a guard period determination method according to another embodiment of the present disclosure. As shown in FIG. 3, the determining, based on indication information transmitted by the network device, the guard period before or in the time domain range includes the following step S301.

At step S301, based on the indication information, the guard period is determined in a downlink time domain resource closest to the time domain range and before the time domain range.

In an embodiment, the indication information of the network device can instruct the terminal to determine the guard period in the downlink time domain resource closest to the time domain range and before the time domain range corresponding to the UL subband.

For example, the time domain range corresponding to the UL subband starts from a first time domain symbol in the n-th DL slot, and the time domain resource adjacent to the time domain range and before the time domain range corresponding to the UL subband includes the (n-1)-th DL slot, thus the guard period can be determined in the (n-1)-th DL slot.

In an embodiment, the guard period includes at least one time domain symbol in the time domain resource close to the time domain range, for example, from the last time domain symbol to the x-th to last time domain symbol in the time domain resource, where x is an integer greater than or equal to 1. Accordingly, the terminal may enter the guard period after performing the downlink reception in the time domain resource, and can perform the uplink transmission immediately after the guard period.

FIG. 4 is a schematic diagram illustrating a guard period according to an embodiment of the present disclosure.

As shown in FIG. 4, a frame structure is DDDSU, where D represents a DL slot, S represents a flexible slot, and U represents an UL slot. In three consecutive DL slots, the UL subband is configured in the second and third DL slots, and the time domain range corresponding to the UL subband starts from a first time domain symbol of the second DL slot.

The terminal, based on the indication information of the network device, can determine the time domain resource, such as the first DL slot, which is closest to the time domain range and before the time domain range corresponding to the UL subband, thus can determine the guard period in the first DL slot, for example, N (N is a positive integer and can be indicated by the network device) time domain symbols, close to the time domain range, in the first DL slot are determined as the guard period.

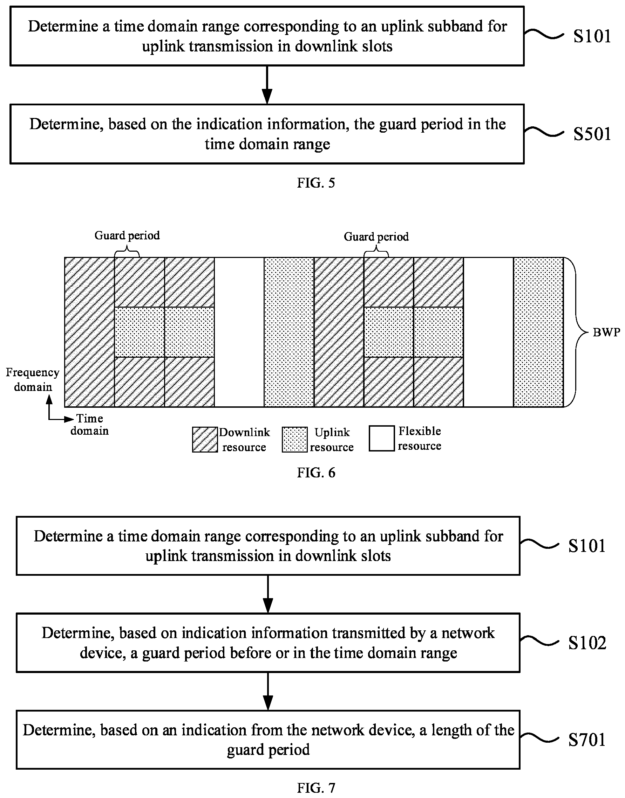

FIG. 5 is a schematic flowchart illustrating a guard period determination method according to yet another embodiment of the present disclosure. As shown in FIG. 5, the determining, based on indication information transmitted by the network device, the guard period before or in the time domain range includes the following step S501.

At step S501, based on the indication information, the guard period is determined in the time domain range.

In an embodiment, the indication information of the network device can instruct the terminal to determine the guard period in the time domain range corresponding to the UL subband.

For example, the time domain range corresponding to the UL subband starts from a first time domain symbol in the n-th DL slot, and the time domain range corresponding to the UL subband includes the n-th DL slot, thus the guard period can be determined in the n-th DL slot.

In an embodiment, the guard period includes at least one earlier time domain symbol in the time domain range, for example, from the first time domain symbol to the y-th time domain symbol in the time domain range, where y is an integer greater than or equal to 1.

FIG. 6 is a schematic diagram illustrating a guard period according to another embodiment of the present disclosure.

As shown in FIG. 6, a frame structure is DDDSU, where D represents a DL slot, S represents a flexible slot, and U represents an UL slot. In three consecutive DL slots, the UL subband is configured in the second and third DL slots, and the time domain range corresponding to the UL subband starts from a first time domain symbol of the second DL slot.

The terminal, based on the indication information of the network device, can determine the time domain range (such as the second DL slot) corresponding to the UL subband, thus can determine the guard period in the second DL slot, for example, N (N is a positive integer and can be indicated by the network device) earlier time domain symbols in the second DL slot are determined as the guard period.

In all embodiments of the present disclosure, based on the indication information of the network device, it can be determined whether the guard period is determined in the time domain range corresponding to the UL subband or before the time domain range corresponding to the UL subband. However, the length of the guard period, such as a number N of occupied time domain symbol, may be determined in other ways. The length of the guard period is exemplarily described below by means of several embodiments.

FIG. 7 is a schematic flowchart illustrating a guard period determination method according to yet another embodiment of the present disclosure. As shown in FIG. 7, the method further includes the following step S701.

At step S701, based on an indication from the network device, a length of the guard period is determined.

In an embodiment, the network device can indicate to the terminal the length of the guard period, for example, the network device indicates to the terminal the number N of time domain symbol occupied by the guard period. For the terminal, since one or more time domain symbols in the time domain range corresponding to the guard period are neither used for uplink transmission nor for downlink reception, each of the one or more time domain symbols can be called an invalid symbol, so the number N of time domain symbol can be called a number of invalid symbol.

The way in which the network device indicates the length of the guard period to the terminal includes, but is not limited to, a semi-static indication through radio resource control (RRC) signaling, and a dynamic indication through downlink control information (DCI) or media access control control element (MAC CE).

For example, in the case of N=2, in the embodiment shown in FIG. 4, the terminal, based on the indication from the network device, may determine two time domain symbols close to the time domain range in the first DL slot as the guard period; in the embodiment shown in FIG. 4, the terminal, based on the indication from the network device, may determine earlier two time domain symbols in the second DL slot as the guard period.

In an embodiment, the method further includes: transmitting to the network device switching capability information, for switching from downlink reception to uplink transmission, of the terminal.

In an embodiment, the terminal may switch the RF device from being used for downlink reception to being used for uplink transmission in the guard period.

In this case, the length of the guard period is mainly related to the length of time required for the terminal to switch from downlink reception to uplink transmission, and the length of time can be characterized by the switching capability information, for switching from downlink reception to uplink transmission, of the terminal. Accordingly, the terminal may transmit to the network device the switching capability information for switching from downlink reception to uplink transmission, so that the network device accurately determines the guard period based on the switching capability information, so as to avoid determining the guard period to be too small and causing the terminal to fail to complete the switching from downlink reception to uplink transmission in the guard period, as well as to avoid setting the guard period to be too large and wasting the time domain resources.

In an embodiment, the method further includes: transmitting to the network device information related to communication delay from the terminal to the network device.

In an embodiment, in the guard period, the terminal can compensate for the transmission delay (e.g., a delay from transmitting a signal by the network device to the reception of the signal by the terminal) between the network device and the terminal, and perform timing synchronization.

In this case, the length of the guard period is mainly related to the transmission delay between the terminal and the network device, therefore, the terminal may transmitting to the network device information related to communication delay from the terminal to the network device, so that the network device accurately determines the guard period based on information related to communication delay, so as to avoid determining the guard period to be too small and causing the terminal to fail to complete the compensation for the transmission delay in the guard period, as well as to avoid setting the guard period to be too large and wasting the time domain resources.

The information related to communication delay includes, but is not limited to, a distance from the terminal to the network device, a coverage range of the cell in which the terminal is located, and the like.

In an embodiment, the network device may determine the length of the guard period based on the switching capability information or the information related to communication delay, or the network device may determine the length of the guard period based on the switching capability information and the information related to communication delay. The specifics can be determined by the network device as needed.

It is to be noted that at least one of the switching capability information and the information related to communication delay can be carried by the MAC CE and transmitted to the network device, or can be transmitted to the network device in random access procedure. The terminal, when transmitting a random access preamble, can indicate the switching capability information and/or the information related to communication delay to the network device. For example, the terminal, when transmitting the preamble, can transmit the switching capability information and/or the information related to communication delay in a displayed manner. Alternatively, the terminal can implicitly indicates the switching capability information and/or the information related to communication delay, for example, the terminal can determine a corresponding preamble based on the switching capability information and/or the information related to communication delay, and transmit the preamble to the network device, such that the network device can determine the switching capability information and/or the information related to communication delay based on the preamble.

In an embodiment, the indication information includes a time division duplex (TDD) uplink downlink (UL-DL) configuration exclusive to the uplink subband.

The network device can carry the TDD UL-DL configuration, exclusive to UL subband, in the indication information transmitted to the terminal. That is, the TDD UL-DL configuration is only suitable for configuring the resource corresponding to the UL subband of the terminal.

For example, if the time domain range corresponding to the UL subband is non-periodic, the TDD UL-DL configuration can configure a resource separately for each of the slots in the time domain range corresponding to the UL subband, and the resources configured for different slots can be different.

For example, if the time domain range corresponding to the UL subband is periodic, the TDD UL-DL configuration can configure a resource separately for each period in the time domain range corresponding to the UL subband, and the resource configured for each period can be the same.

The contents included in the TDD UL-DL configuration are exemplarily illustrated by the following embodiments in two cases where the time domain range corresponding to the UL subband is periodic or non-periodic.

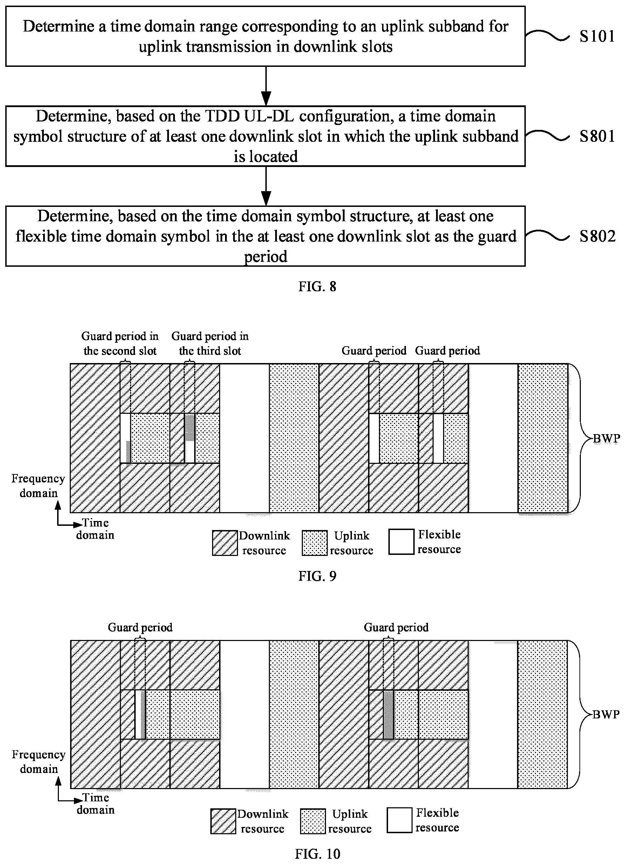

FIG. 8 is a schematic flowchart illustrating a guard period determination method according to yet another embodiment of the present disclosure. As shown in FIG. 8, the determining, based on indication information transmitted by the network device, the guard period in the time domain range includes the following steps S801 and S802.

At step S801, based on the TDD UL-DL configuration, a time domain symbol structure of at least one downlink slot in which the uplink subband is located is determined.

At step S802, based on the time domain symbol structure, at least one flexible time domain symbol in the at least one downlink slot is determined as the guard period.

In an embodiment, the time domain range corresponding to the UL subband may be non-periodic, the TDD UL-DL configuration can configure a resource separately for each of the slots in the time domain range corresponding to the UL subband, and the resources configured for different slots can be different.

FIG. 9 is a schematic diagram illustrating a guard period according to yet another embodiment of the present disclosure.

In an embodiment, the TDD UL-DL configuration can configure a respective resource for each of the slots in the time domain range corresponding to the UL subband, such as configuring a respective slot structure for each of the slots.

As shown in FIG. 9, a frame structure is DDDSU, where D represents a DL slot, S represents a flexible slot, and U represents an UL slot. In three consecutive DL slots, the UL subband is configured in the second and third DL slots, and the time domain range corresponding to the UL subband starts from a first time domain symbol of the second DL slot.

According to the TDD UL-DL configuration of the network device, the slot structure of the second DL slot is SSUUUUUUUUUUUU, and the slot structure of the third DL slot is DDDDDSSUUUUUUU. D represents a downlink time domain symbol, S represents a flexible time domain symbol, and U represents an uplink time domain symbol.

In the second DL slot, the terminal can determine the first and second symbols as the flexible time domain symbols, thus determine the first and second symbols as the guard period. In the third DL slot, the terminal can determine the sixth and seventh symbols as the flexible time domain symbols, thus determine the sixth and seventh symbols as the guard period.

In addition to configuring the slot structure for the terminal, the network device may also configure the index of each of the slots in the time domain range corresponding to the UL subband, e.g., the slot indexes corresponding to the second DL slot and the third DL slot are slot#1 and slot#2, respectively, and the slot indexes configured by the network device for the terminal may include slot#1 and slot#2. Alternatively, you can configure a period (which can also be called a time domain length) of the slots in the time domain range corresponding to the UL subband, for example, the time domain range corresponding to the UL subband in FIG. 9 includes two slots, and the period can be two slots.

In an embodiment, the time domain range corresponding to the UL subband is periodic, the TDD UL-DL configuration can configure a resource separately for each period in the time domain range corresponding to the UL subband, and the resource configured for each period can be the same. The TDD UL-DL configuration includes at least one of pieces of configuration information:
a time domain period (e.g., a number of slot included in the corresponding time domain range) of the uplink subband, a first number of downlink slot in the time domain period, a second number of downlink time domain symbol after the downlink slot in the time domain period, a third number of uplink slot (e.g., a slot in which all symbols are uplink symbols) in the time domain period, or a fourth number of uplink time domain symbol in a slot before the earliest uplink slot in the time domain period.

In an embodiment, the determining, based on the indication information transmitted by the network device, the guard period in the time domain range includes:
based on one or more of the at least one of pieces of configuration information, determining at least one flexible time domain symbol in the downlink slot as the guard period, or determining at least one unconfigured time domain symbol in the downlink slot as the guard period.

FIG. 10 is a schematic diagram illustrating a guard period according to yet another embodiment of the present disclosure.

In an embodiment, a frame structure is DDDSU, where D represents a DL slot, S represents a flexible slot, and U represents an UL slot. In three consecutive DL slots, the UL subband is configured in the second and third DL slots, and the time domain range corresponding to the UL subband starts from a first time domain symbol of the second DL slot.

For example, the time domain period in the TDD UL-DL configuration is two slots, the first number is 0, the second number is 3, the third number is 1, and the fourth number is 9. The guard period determined by the terminal accordingly may be as shown in FIG. 10, i.e., the first time domain symbol to the third time domain symbol in the second slot are the downlink time domain symbols, and the third slot is a uplink slot. Eight time domain symbols before the third slot are uplink time domain symbols, i.e., the sixth time domain symbol to the fourteenth time domain symbol in the second slot are uplink time domain symbols. Accordingly, it can be determined that the fourth time domain symbol and the fifth time domain symbol in the second slot are not configured, and therefore can be used as flexible time domain symbols, and thus the terminal determines the flexible time domain symbols as the guard period, or the terminal directly determines the fourth time domain symbol and the fifth time domain symbol that are not configured as the guard period.

In an embodiment, the method further includes: determining, based on an instruction from the network device, a starting slot of at least one downlink slot in which the uplink subband is located.

The network device may indicate to the terminal the starting slot of the at least one DL slot in which the UL subband is located, e.g. the network device may indicate an index of the starting slot, e.g. for a plurality of consecutive DL slots, the index is counted from 0. For example, in the case of three consecutive DL slots in the embodiment shown previously, the index indicated by the network device is 1, whereby the terminal can determine the starting slot in the DL slots in which the UL subband is located to be the second DL slot.

It is to be noted that the network device may indicate other information in addition to the starting slot, which may be set as required, for example, the network device may indicate the period of the UL subband, and in the case of three consecutive DL slots in the embodiment shown previously, the period may be two slots.

In an embodiment, the method further includes: determining, based on the TDD UL-DL configuration, a starting slot of at least one downlink slot in which the uplink subband is located.

The network device can configure the starting slot of the at least one downlink slot in which the uplink subband is located for the terminal through the TDD UL-DL configuration, without a separate indication.

Furthermore, the TDD UL-DL configuration includes contents that are not limited to those described in the above-mentioned embodiments. For example, uplink and downlink structures of the time domain range corresponding to the UL subband may also be configured, such as {DL, flexible, UL}, {Flexible, UL}, where {DL, flexible, UL} indicates that the time domain range corresponding to the UL subband includes a downlink resources, a flexible resource, and an uplink resource in turn, and {Flexible, UL} indicates that the time domain range corresponding to the UL subband includes a flexible resource, an uplink resource in turn. For example, a number of DL-to-UL switching point in the time domain range corresponding to the UL subband may be also configured, which can be 0, 1, or more than 1, as required.

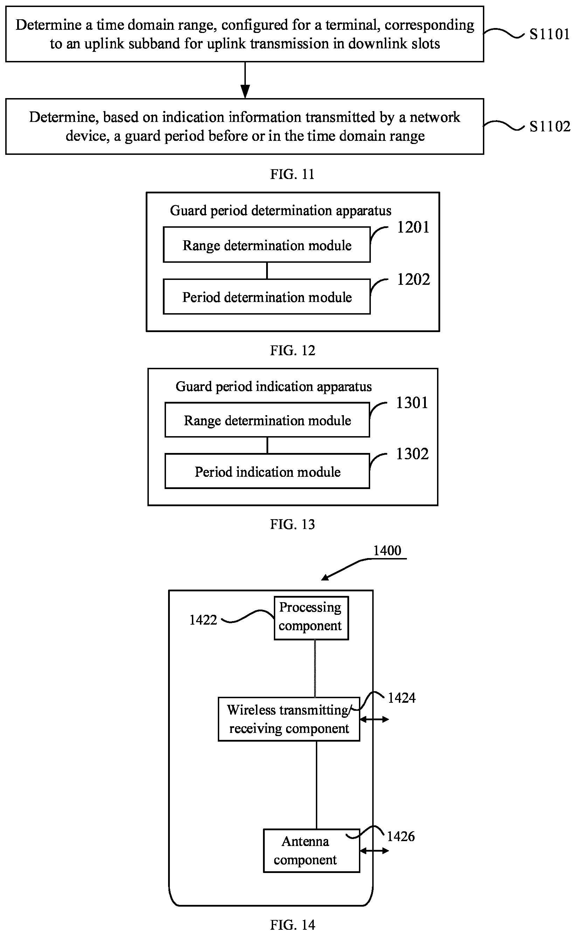

FIG. 11 is a schematic flowchart illustrating a guard period determination method according to an embodiment of the present disclosure. The guard period determination method shown in this embodiment can be applied to a network device, which can communicate with a terminal. The network device includes, but is not limited to, a base station (such as a 4G base station, a 5G base station, a 6G base station and the like) in a communication system. The terminal includes, but is not limited to, a communication device such as a mobile phone, a tablet, a wearable device, a sensor, and an IoT device (e.g., NB-IoT, MTC, eMTC).

As shown in FIG. 11, the guard period determination method may include the following steps S1101 and S1102.

At step S1101, a time domain range, configured for a terminal, corresponding to an uplink subband for uplink transmission in downlink slots is determined.

At step S1102, based on indication information transmitted by a network device, a guard period is determined before or in the time domain range.

In an embodiment, duplex communication may be performed between the terminal and the network device, for example, full duplex communication may be performed, or half duplex communication may be performed.

The network device can configure the downlink (DL) slot for the terminal, and a frequency domain resource corresponding to the DL slot can include a frequency band or one or more bandwidth parts (BWPs) in a frequency band.

In an embodiment, the DL slot configured by the network device to the terminal may be a plurality of consecutive DL slots, some of the plurality of consecutive DL slots may be configured with a UL subband, so that there is a downlink time domain resource for downlink data reception before the time domain range corresponding to the UL subband.

For example, the time domain range corresponding to the UL subband starts from a first time domain symbol in a n-th (n is a positive integer) DL slot, and the time domain resource before the time domain range corresponding to the UL subband includes a (n-1)-th DL slot.

For example, the time domain range corresponding to the UL subband starts from a fifth time domain symbol in the n-th DL slot, and the time domain resource, before the time domain range, corresponding to the UL subband includes the first four time domain symbols in the n-th DL slot.

The time domain symbol is an orthogonal frequency division multiplexing (OFDM) symbol.

However, the terminal needs some time to switch the radio frequency (RF) device when switching from downlink reception to uplink transmission, otherwise it will bring interference to the uplink transmission. For example, the uplink transmission is performed after the downlink reception in the downlink time domain resource, if the switching of the RF device is not completed when the uplink transmission is required, the switching still needs to be completed before the terminal can perform the uplink transmission, which results in a delay in the timing of the uplink transmission, and thus causes interference to the uplink transmission.

According to the embodiments of the present disclosure, the terminal can determine the time domain range, configured by the network device, corresponding to the uplink subband for uplink transmission in downlink slots, and determine, based on the indication information transmitted by the network device, the guard period before or in the time domain range. The terminal does not expect to receive downlink data and does not transmit uplink data in the guard period, but may instead perform the switching from downlink reception to uplink transmission, so as to ensure that the terminal has completed the switching by the time the terminal needs to perform the uplink transmission, so that the terminal can perform the uplink transmission in a timely manner, and interference with the uplink transmission caused by the occurrence of a delay in the uplink transmission is avoided. It is to be noted that the indication information of the network device is known to both the network device and the terminal, so that the terminal does not expect to receive downlink data and does not transmit uplink data in the guard period, and the network device does not expect to receive uplink data transmitted by the terminal and does not transmit downlink data to the terminal in the guard period. But the network device may receive uplink data transmitted by other terminals or transmit downlink data to other terminals in the guard period.

In an embodiment, the guard period is for the terminal to switch from downlink reception to uplink transmission. For example, the terminal may switch the RF device from being used for downlink reception to being used for uplink transmission in the guard period. However, it is to be noted that the operation performed by the terminal in the guard period is not limited to the switching from downlink to uplink, but other operations may be performed as required, such as performing operations such as compensating for the transmission delay (e.g., a delay from transmitting a signal by the network device to the reception of the signal by the terminal) between the network device and the terminal, performing timing synchronization, and the like.

In addition, it is to be noted that the UL subband applicable to the embodiments of the present disclosure includes an UL subband after a DL slot and adjacent to the DL slot, or an UL subband after a DL symbol and adjacent to the DL symbol. This is because the need to set the guard period is only necessary for the UL subband in this case.

In an embodiment, the indication information is configured to instruct the terminal to determine the guard period in a downlink time domain resource closest to the time domain range and before the time domain range.

The network device can instruct, by the indication information, the terminal to determine the guard period in the downlink time domain resource closest to the time domain range and before the time domain range corresponding to the UL subband.

For example, the time domain range corresponding to the UL subband starts from a first time domain symbol in the n-th DL slot, and the time domain resource adjacent to the time domain range and before the time domain range corresponding to the UL subband includes the (n-1)-th DL slot, thus the guard period can be determined in the (n-1)-th DL slot.

In an embodiment, the guard period includes at least one time domain symbol in the time domain resource close to the time domain range, for example, from the last time domain symbol to the x-th to last time domain symbol in the time domain resource, where x is an integer greater than or equal to 1. Accordingly, the terminal may enter the guard period after performing the downlink reception in the time domain resource, and can perform the uplink transmission immediately after the guard period.

As shown in FIG. 4, a frame structure is DDDSU, where D represents a DL slot, S represents a flexible slot, and U represents an UL slot. In three consecutive DL slots, the UL subband is configured in the second and third DL slots, and the time domain range corresponding to the UL subband starts from a first time domain symbol of the second DL slot.

The terminal, based on the indication of the network device, can determine the time domain resource, such as the first DL slot, which is closest to the time domain range and before the time domain range corresponding to the UL subband, thus can determine the guard period in the first DL slot, for example, N (N is a positive integer and can be indicated by the network device) time domain symbols, close to the time domain range, in the first DL slot are determined as the guard period.

Correspondingly, the guard period determined by the network device based on the indication of the network device is the same as the guard period determined by the terminal, and in the guard period, the network device may not transmit downlink information to the terminal, nor expect to receive uplink information transmitted by the terminal. However, the network device can transmit downlink information to other terminals or receive uplink information from other terminals.

In an embodiment, the indication information is configured to instruct the terminal to determine the guard period in the time domain range.

The network device can instruct, by the indication information, the terminal to determine the guard period in the time domain range corresponding to the UL subband.

For example, the time domain range corresponding to the UL subband starts from a first time domain symbol in the n-th DL slot, and the time domain range corresponding to the UL subband includes the n-th DL slot, thus the guard period can be determined in the n-th DL slot.

In an embodiment, the guard period includes at least one earlier time domain symbol in the time domain range, for example, from the first time domain symbol to the y-th time domain symbol in the time domain range, where y is an integer greater than or equal to 1.

As shown in FIG. 6, a frame structure is DDDSU, where D represents a DL slot, S represents a flexible slot, and U represents an UL slot. In three consecutive DL slots, the UL subband is configured in the second and third DL slots, and the time domain range corresponding to the UL subband starts from a first time domain symbol of the second DL slot.

The terminal, based on the indication information of the network device, can determine the time domain range (such as the second DL slot) corresponding to the UL subband, thus can determine the guard period in the second DL slot, for example, N (N is a positive integer and can be indicated by the network device) earlier time domain symbols in the first DL slot are determined as the guard period.

Correspondingly, the guard period determined by the network device based on the indication of the network device is the same as the guard period determined by the terminal, and in the guard period, the network device may not transmit downlink information to the terminal, nor expect to receive uplink information transmitted by the terminal. However, the network device can transmit downlink information to other terminals or receive uplink information from other terminals.

In an embodiment, the method further includes: indicating to the terminal a starting slot of at least one downlink slot in which the uplink subband is located.

The network device may indicate to the terminal the starting slot of the at least one DL slot in which the UL subband is located, e.g. the network device may indicate an index of the starting slot, e.g. for a plurality of consecutive DL slots, the index is counted from 0. For example, in the case of three consecutive DL slots in the embodiment shown previously, the index indicated by the network device is 1, whereby the terminal can determine the starting slot in the DL slots in which the UL subband is located to be the second DL slot.

In all embodiments of the present disclosure, based on the indication information of the network device, it can be determined whether the guard period is determined in the time domain range corresponding to the UL subband or before the time domain range corresponding to the UL subband. However, the length of the guard period, such as a number N of occupied time domain symbols, may be determined in other ways. The length of the guard period is exemplarily described below by means of several embodiments.

In an embodiment, the method further includes:
indicating to the terminal a length of the guard period.

In an embodiment, the network device can indicate to the terminal the length of the guard period, for example, the network device indicates to the terminal the number N of time domain symbol occupied by the guard period. For the terminal, since one or more time domain symbols in the time domain range corresponding to the guard period are neither used for uplink transmission nor for downlink reception, each of the one or more time domain symbols can be called an invalid symbol, so the number N of time domain symbol can be called a number of invalid symbol.

In an embodiment, the network device can indicate to the terminal the length of the guard period, for example, the network device indicates to the terminal the number N of time domain symbol occupied by the guard period.

The way of indication includes, but is not limited to, a semi-static indication through radio resource control (RRC) signaling, and a dynamic indication through downlink control information (DCI) or media access control control element (MAC CE).

For example, in the case of N=2, in the embodiment shown in FIG. 4, the terminal, based on the indication from the network device, may determine two time domain symbols close to the time domain range in the first DL slot as the guard period; in the embodiment shown in FIG. 4, the terminal, based on the indication from the network device, may determine earlier two time domain symbols in the second DL slot as the guard period.

In an embodiment, the method further includes: receiving switching capability information, for switching from downlink reception to uplink transmission, of the terminal transmitted by the terminal; and determining, based on the switching capability information, a length of the guard period.

In an embodiment, the terminal may switch the RF device from being used for downlink reception to being used for uplink transmission in the guard period.

In this case, the length of the guard period is mainly related to the length of time required for the terminal to switch from downlink reception to uplink transmission, and the length of time can be characterized by the switching capability information, for switching from downlink reception to uplink transmission, of the terminal. Accordingly, the terminal may transmit to the network device the switching capability information for switching from downlink reception to uplink transmission, so that the network device accurately determines the guard period based on the switching capability information, so as to avoid determining the guard period to be too small and causing the terminal to fail to complete the switching from downlink reception to uplink transmission in the guard period, as well as to avoid setting the guard period to be too large and wasting the time domain resources.

In an embodiment, the method further includes: determining information related to communication delay from the terminal to the network device; and determining, based on the information related to communication delay, a length of the guard period.

In an embodiment, in the guard period, the terminal can compensate for the transmission delay (e.g., a delay from transmitting a signal by the network device to the reception of the signal by the terminal) between the network device and the terminal, and perform timing synchronization.

In this case, the length of the guard period is mainly related to the transmission delay between the terminal and the network device, so that the network device may determine the information related to the communication delay from the terminal to the network device, for example, the information related to the communication delay determined by the terminal may be transmitted to the network device by the terminal, or the network device autonomously determines the information related to the communication delay. Therefore, the guard period can be accurately determined based on information related to communication delay, so as to avoid determining the guard period to be too small and causing the terminal to fail to complete the compensation for the transmission delay in the guard period, as well as to avoid setting the guard period to be too large and wasting the time domain resources.

The information related to communication delay includes, but is not limited to, a distance from the terminal to the network device, a coverage range of the cell in which the terminal is located, and the like.

In an embodiment, the network device may determine the length of the guard period based on the switching capability information or the information related to communication delay, or the network device may determine the length of the guard period based on the switching capability information and the information related to communication delay. The specifics can be determined by the network-side device as needed.

In an embodiment, the indication information includes a time division duplex (TDD) uplink downlink (UL-DL) configuration exclusive to the uplink subband.

The network device can carry the TDD UL-DL configuration, exclusive to UL subband, in the indication information transmitted to the terminal. That is, the TDD UL-DL configuration is only suitable for configuring the resource corresponding to the UL subband of the terminal.

For example, if the time domain range corresponding to the UL subband is non-periodic, the TDD UL-DL configuration can configure a resource separately for each of the slots in the time domain range corresponding to the UL subband, and the resources configured for different slots can be different.

For example, if the time domain range corresponding to the UL subband is periodic, the TDD UL-DL configuration can configure a resource separately for each period in the time domain range corresponding to the UL subband, and the resource configured for each period can be the same.

The contents included in the TDD UL-DL configuration are exemplarily illustrated by the following embodiments in two cases where the time domain range corresponding to the UL subband is periodic or non-periodic.

In an embodiment, the TDD UL-DL configuration is configured to configure a time domain symbol structure of at least one downlink slot in which the uplink subband is located, and the time domain symbol structure is for the terminal to determine at least one flexible time domain symbol in the downlink slot as the guard period.

In an embodiment, the time domain range corresponding to the UL subband may be non-periodic, the TDD UL-DL configuration can configure a resource separately for each of the slots in the time domain range corresponding to the UL subband, and the resources configured for different slots can be different.

In an embodiment, the TDD UL-DL configuration can configure a respective resource for each of the slots in the time domain range corresponding to the UL subband, such as configuring a respective slot structure for each of the slots.

As shown in FIG. 9, a frame structure is DDDSU, where D represents a DL slot, S represents a flexible slot, and U represents an UL slot. In three consecutive DL slots, the UL subband is configured in the second and third DL slots, and the time domain range corresponding to the UL subband starts from a first time domain symbol of the second DL slot.

According to the TDD UL-DL configuration of the network device, the slot structure of the second DL slot is SSUUUUUUUUUUUU, and the slot structure of the third DL slot is DDDDDSSUUUUUUU. D represents a downlink time domain symbol, S represents a flexible time domain symbol, and U represents an uplink time domain symbol.

In the second DL slot, the terminal can determine the first and second symbols as the flexible time domain symbols, thus determine the first and second symbols as the guard period. In the third DL slot, the terminal can determine the sixth and seventh symbols as the flexible time domain symbols, thus determine the sixth and seventh symbols as the guard period.

In addition to configuring the slot structure for the terminal, the network device may also configure the index of each of the slots in the time domain range corresponding to the UL subband, e.g., the slot indexes corresponding to the second DL slot and the third DL slot are slot#1 and slot#2, respectively, and the slot indexes configured by the network device for the terminal may include slot#1 and slot#2. Alternatively, you can configure a period (which can also be called a time domain length) of the slots in the time domain range corresponding to the UL subband, for example, the time domain range corresponding to the UL subband in FIG. 9 includes two slots, and the period can be two slots.

In an embodiment, the time domain range corresponding to the UL subband is periodic, the TDD UL-DL configuration can configure a resource separately for each period in the time domain range corresponding to the UL subband, and the resource configured for each period can be the same. The TDD UL-DL configuration includes at least one of pieces of configuration information:
a time domain period of the uplink subband, a first number of downlink slot in the time domain period, a second number of downlink time domain symbol after the downlink slot in the time domain period, a third number of uplink slot in the time domain period, or a fourth number of uplink time domain symbol in a slot before the earliest uplink slot in the time domain period.

In an embodiment, one or more of the at least one of pieces of configuration information is for the terminal to determine at least one flexible time domain symbol in the downlink slot as the guard period, or determine at least one unconfigured time domain symbol in the downlink slot as the guard period.

In an embodiment, a frame structure is DDDSU, where D represents a DL slot, S represents a flexible slot, and U represents an UL slot. In three consecutive DL slots, the UL subband is configured in the second and third DL slots, and the time domain range corresponding to the UL subband starts from a first time domain symbol of the second DL slot.

For example, the time domain period in the TDD UL-DL configuration is two slots, the first number is 0, the second number is 3, the third number is 1, and the fourth number is 9. The guard period determined by the terminal accordingly may be as shown in FIG. 10, i.e., the first time domain symbol to the third time domain symbol in the second slot are the downlink time domain symbols, and the third slot is a uplink slot. Eight time domain symbols before the third slot are uplink time domain symbols, i.e., the sixth time domain symbol to fourteenth time domain symbol in the second slot are uplink time domain symbols. Accordingly, it can be determined that the fourth time domain symbol and the fifth time domain symbol in the second slot are not configured, and therefore can be used as flexible time domain symbols, and thus the terminal determines the flexible time domain symbols as the guard period, or the terminal directly determines the fourth time domain symbol and the fifth time domain symbol that are not configured as the guard period.

In an embodiment, the method further includes:
indicating to the terminal a starting slot of at least one downlink slot in which the uplink subband is located.

The network device may indicate to the terminal the starting slot of the at least one DL slot in which the UL subband is located, e.g. the network device may indicate an index of the starting slot, e.g. for a plurality of consecutive DL slots, the index is counted from 0. For example, in the case of three consecutive DL slots in the embodiment shown previously, the index indicated by the network device is 1, whereby the terminal can determine the starting slot in the DL slots in which the UL subband is located to be the second DL slot.

It is to be noted that the network device may indicate other information in addition to the starting slot, which may be set as required, for example, the network device may indicate the period of the UL subband, and in the case of three consecutive DL slots in the embodiment shown previously, the period may be two slots.

In an embodiment, the method further includes:
configuring, through the TDD UL-DL configuration, a starting slot of at least one downlink slot in which the uplink subband is located.

The network device can configure the starting slot of the at least one downlink slot in which the uplink subband is located for the terminal through the TDD UL-DL configuration, without a separate indication.

Furthermore, the TDD UL-DL configuration includes contents that are not limited to those described in the above-mentioned embodiments. For example, uplink and downlink structures of the time domain range corresponding to the UL subband may also be configured, such as {DL, flexible, UL}, {Flexible, UL}, where {DL, flexible, UL} indicates that the time domain range corresponding to the UL subband includes a downlink resources, a flexible resource, and an uplink resource in turn, and {Flexible, UL} indicates that the time domain range corresponding to the UL subband includes a flexible resource, an uplink resource in turn. For example, a number of DL-to-UL switching point in the time domain range corresponding to the UL subband may be also configured, which can be 0, 1, or more than 1, as required.

Corresponding to the foregoing embodiments of the guard period determination method, the present disclosure also provides embodiments of a guard period determination apparatus.

FIG. 12 is a schematic block diagram illustrating a guard period determination apparatus according to an embodiment of the present disclosure. The guard period determination apparatus shown in this embodiment may be applied to a terminal. The terminal includes, but is not limited to, a communication device such as a cell phone, a tablet, a wearable device, a sensor, an internet of things (IoT) device, and the like. The terminal may communicate with a network device. The network device includes, but is not limited to a network device (such as a base station, a core network, and the like) in a communication system such as a 4th generation (4G) communication system, 5G communication system, 6G communication system, etc.

As shown in FIG. 12, the guard period determination apparatus may include a range determination module 1201, and a period determination module 1202.

The range determination module 1201 is configured to determine a time domain range corresponding to an uplink subband for uplink transmission in downlink slots.

The period determination module 1202 is configured to determine, based on indication information transmitted by a network device, a guard period before or in the time domain range.

In an embodiment, the guard period is for the terminal to switch from downlink reception to uplink transmission.

In an embodiment, the period determination module is configured to determine, based on the indication information, the guard period in a downlink time domain resource closest to the time domain range and before the time domain range.

In an embodiment, the guard period includes at least one time domain symbol, closest to the time domain range, in the time domain resource.

In an embodiment, the period determination module is configured to determine, based on the indication information, the guard period in the time domain range.

In an embodiment, the guard period includes at least one time domain symbol early in the time domain range.

In an embodiment, the guard period determination apparatus further includes a length determination module, configured to determine, based on an indication from the network device, a length of the guard period.

In an embodiment, the indication information includes a time division duplex (TDD) uplink downlink (UL-DL) configuration exclusive to the uplink subband.

In an embodiment, the period determination module is configured to determine, based on the TDD UL-DL configuration, a time domain symbol structure of at least one downlink slot in which the uplink subband is located; and determine, based on the time domain symbol structure, at least one flexible time domain symbol in the downlink slot as the guard period.

In an embodiment, the TDD UL-DL configuration includes at least one of pieces of configuration information:
a time domain period of the uplink subband, a first number of downlink slot in the time domain period, a second number of downlink time domain symbol after the downlink slot in the time domain period, a third number of uplink slot in the time domain period, or a fourth number of uplink time domain symbol in a slot before the earliest uplink slot in the time domain period.

In an embodiment, the period determination module is configured to, based on one or more of the at least one of pieces of configuration information, determine at least one flexible time domain symbol in the downlink slot as the guard period, or determine at least one unconfigured time domain symbol in the downlink slot as the guard period.

In an embodiment, the guard period determination apparatus further includes a starting slot determination module.

The starting slot determination module is configured to determine, based on an instruction from the network device, a starting slot of at least one downlink slot in which the uplink subband is located.

In an embodiment, the guard period determination apparatus further includes a starting slot determination module.

The starting slot determination module is configured to determine, based on the TDD UL-DL configuration, a starting slot of at least one downlink slot in which the uplink subband is located.

In an embodiment, the guard period determination apparatus further includes a transmitting module.

The transmitting module is configured to transmit switching capability information of the terminal switching from downlink reception to uplink transmission to the network device.

In an embodiment, the guard period determination apparatus further includes a transmitting module.

The transmitting module is configured to transmit to the network device information related to communication delay from the terminal to the network device.

In an embodiment, the uplink subband is an uplink subband after a downlink slot or a downlink time domain symbol and adjacent to the downlink slot or the downlink time domain symbol.

FIG. 13 is a schematic block diagram illustrating a guard period indication apparatus according to an embodiment of the present disclosure. The guard period indication apparatus shown in this embodiment can be applied to a network device, which can communicate with a terminal. The network device includes, but is not limited to, a base station (such as a 4G base station, a 5G base station, a 6G base station and the like) in a communication system. The terminal includes, but is not limited to, a communication device such as a mobile phone, a tablet, a wearable device, a sensor, and an IoT device (e.g., NB-IoT, MTC, eMTC).

As shown in FIG. 13, the guard period indication apparatus may include a range determination module 1301, and a period indication module 1302.

The range determination module 1301 is configured to determine a time domain range, configured for a terminal, corresponding to an uplink subband for uplink transmission in downlink slots.

The period indication module is configured to transmit indication information to the terminal, where the indication information is configured to instruct the terminal to determine a guard period before or in the time domain range.

In an embodiment, the guard period is for the terminal to switch from downlink reception to uplink transmission.

In an embodiment, the indication information is configured to instruct the terminal to determine the guard period in a downlink time domain resource closest to the downlink time domain range and before the time domain range.

In an embodiment, the guard period includes at least one time domain symbol, closest to the time domain range, in the time domain resource.

In an embodiment, the indication information is configured to instruct the terminal to determine the guard period in the time domain range.

In an embodiment, the guard period includes at least one time domain symbol early in the time domain range.

In an embodiment, the guard period determination apparatus further includes a transmitting module, configured to indicate to the terminal a length of the guard period.

In an embodiment, the guard period indication apparatus further includes: a receiving module, configured to receive switching capability information, for switching from downlink reception to uplink transmission, of the terminal transmitted by the terminal; and a length determination module, configured to determine, based on the switching capability information, a length of the guard period.

In an embodiment, the guard period indication apparatus further includes: a delay determination module, configured to determine information related to communication delay from the terminal to the network device; and a length determination module, configured to determine, based on the information related to communication delay, a length of the guard period.

In an embodiment, the guard period indication apparatus further includes a transmitting module, configured to indicate to the terminal a starting slot of at least one downlink slot in which the uplink subband is located.

In an embodiment, the indication information includes a time division duplex (TDD) uplink downlink (UL-DL) configuration exclusive to the uplink subband.

In an embodiment, the TDD UL-DL configuration is configured to configure a time domain symbol structure of at least one downlink slot in which the uplink subband is located, and the time domain symbol structure is for the terminal to determine at least one flexible time domain symbol in the downlink slot as the guard period.

In an embodiment, the TDD UL-DL configuration includes at least one of pieces of configuration information:
a time domain period of the uplink subband, a first number of downlink slot in the time domain period, a second number of downlink time domain symbol after the downlink slot in the time domain period, a third number of uplink slot in the time domain period, or a fourth number of uplink time domain symbol in a slot before the earliest uplink slot in the time domain period.

In an embodiment, one or more of the at least one of pieces of configuration information is for the terminal to determine at least one flexible time domain symbol in the downlink slot as the guard period, or determine at least one unconfigured time domain symbol in the downlink slot as the guard period.

In an embodiment, the guard period indication apparatus further includes an indication module, configured to indicate to the terminal a starting slot of at least one downlink slot in which the uplink subband is located.

In an embodiment, the TDD UL-DL configuration is also configured to configure a starting slot of at least one downlink slot in which the uplink subband is located.

With regard to the device in the above examples, the specific manner in which the respective modules perform the operations has been described in detail in the examples of the related methods, and will not be explained in detail herein.

Since the embodiments of the apparatus substantially corresponds to the embodiments of the method, relevant parts may be referred to the description of the embodiments of the method. The apparatus examples described above are merely illustrative, where the modules described as separate members may be or not be physically separated, and the members displayed as modules may be or not be physical units, i.e., may be located in one place, or may be distributed in a plurality of network modules. Part or all of the modules may be selected according to actual requirements to implement the objectives of the solutions in the examples. It may be understood and implemented by those skilled in the art without creative work.

The embodiments of the present disclosure provide a communication device, including: a processor; and a memory storing computer programs, where the computer programs, when executed by the processor, cause the processor to perform the guard period determination method.

The embodiments of the present disclosure provide a communication device, including: a processor; and a memory storing computer programs, where the computer programs, when executed by the processor, cause the processor to perform the guard period indication method.

The embodiments of the present disclosure provide a computer-readable storage medium, storing computer programs thereon, where the computer programs, when executed by a processor, cause the processor to perform the guard period determination method.

The embodiments of the present disclosure provide a computer-readable storage medium, storing computer programs thereon, where the computer programs, when executed by a processor, cause the processor to perform the guard period indication method.

FIG. 14 is a schematic block diagram illustrating a device 1400 for indicating a guard period according to an embodiment of the present disclosure. The device 1400 may be provided as a base station. Referring to FIG. 14, the device 1400 includes a processing component 1422, a wireless transmitting/receiving component 1424, an antenna component 1426, and a signal processing portion (not shown in the figures) specific to a wireless interface. The processing component 1422 may further include one or more processors. One of the processors in the processing component 1422 may be configured to perform the guard period indication method in any one of the embodiments.

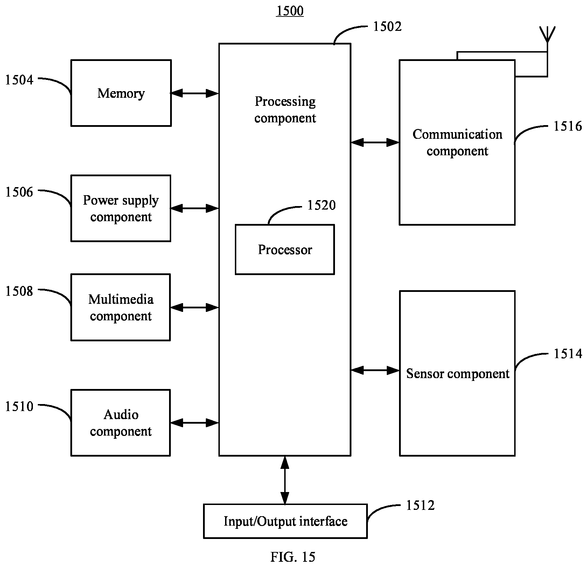

FIG. 15 is a schematic block diagram illustrating a device 1500 for determining a guard period according to an embodiment of the present disclosure. For example, the device 1500 can be a mobile phone, a computer, a digital broadcast terminal, a message transmitting and receiving device, a gaming console, a tablet device, a medical device, a fitness device, a personal digital assistant, and the like.

Referring to FIG. 15, the device 1500 can include one or more of the following components: a processing component 1502, a memory 1504, a power supply component 1506, a multimedia component 1508, an audio component 1510, an input/output (I/O) interface 1512, a sensor component 1514, and a communication component 1516.

The processing component 1502 usually controls overall operations of the device 1500, such as operations related to display, a telephone call, data communication, a camera operation and a record operation. The processing component 1502 may include one or more processors 1520 to execute instructions to complete all or a part of the steps of the guard period determination method. Further, the processing component 1502 may include one or more modules to facilitate interaction between the processing component 1502 and another component. For example, the processing component 1502 may include a multimedia module to facilitate the interaction between the multimedia component 1508 and the processing component 1502.

The memory 1504 is configured to store different types of data to support the operations of the device 1500. Examples of such data include instructions, contact data, phone book data, messages, pictures, videos, and so on for any application or method that operates on the device 1500. The memory 1504 may be implemented by any type of volatile or non-volatile storage device or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a disk or optical disk.

The power supply component 1506 provides power for different components of the device 1500. The power supply component 1506 may include a power management system, one or more power sources, and other components associated with generating, managing and distributing power for the device 1500.

The multimedia component 1508 includes a screen for providing an output interface between the device 1500 and a user. In some embodiments, the screen may include a liquid crystal display (LCD) and/or a touch panel (TP). If the screen includes a touch panel, the screen may be implemented as a touch screen for receiving an input signal from a user. The touch panel may include one or more touch sensors for sensing a touch, a slide and a gesture on the touch panel. The touch sensor may not only sense a boundary of a touching or sliding movement, but also detect duration and pressure related to the touching or sliding operation. In some examples, the multimedia component 1508 may include a front camera and/or a rear camera. When the device 1500 is in an operation mode, such as a shooting mode or a video mode, the front camera and/or the rear camera can receive external multimedia data. Each of the front camera and the rear camera may be a fixed optical lens system or be of a focal length and a capability of an optical zoom.

The audio component 1510 is configured to output and/or input an audio signal. For example, the audio component 1510 may include a microphone (MIC). When the device 1500 is in an operating mode, such as a call mode, a recording mode and a speech recognition mode, the microphone is configured to receive an external audio signal. The received audio signal may be further stored in the memory 1504 or sent via the communication component 1516. In some embodiments, the audio component 1510 also includes a speaker for outputting an audio signal.

The I/O interface 1512 provides an interface between the processing component 1502 and a peripheral interface module which may be a keyboard, a click wheel, a button, or the like. Such buttons may include but not limited to: a home button, a volume button, a start button and a lock button.

The sensor component 1514 includes one or more sensors for providing state assessments in different aspects for the device 1500. For example, the sensor component 1514 can detect an open/closed state of the device 1500, a relative positioning of components, such as the display and keypad of the device 1500, and sensor component 1514 can also detect a change in position of the device 1500 or a component of the device 1500, the presence or absence of user contact with the device 1500, orientation or acceleration/deceleration of the device 1500, and temperature change of the device 1500. The sensor component 1514 may include a proximity sensor configured to detect presence of a nearby object without any physical contact. The sensor component 1514 may also include an optical sensor, such as a CMOS or CCD image sensor used in an imaging application. In some examples, the sensor component 1514 may also include an acceleration sensor, a gyro sensor, a magnetic sensor, a pressure sensor, or a temperature sensor.

The communication component 1516 is configured to facilitate wired or wireless communication between the device 1500 and other devices. The device 1500 may access a wireless network based on a communication standard, such as WiFi, 2G, 3G, 4G LTE, 5G NR, or a combination thereof. In some embodiments, the communication component 1516 may receive a broadcast signal or broadcast-related information from an external broadcast management system via a broadcast channel. In an example, the communication component 1516 may also include a near field communication (NFC) module to facilitate short-range communications. For example, the NFC module may be implemented based on a radio frequency identification (RFID) technology, an infrared data association (IrDA) technology, an ultra wide band (UWB) technology, a Bluetooth (BT) technology, and other technologies.

In an exemplary example, device 1500 may be implemented by one or more application specific integrated circuits (ASICs), digital signal processors (DSPs), digital signal processing devices (DSPDs), programmable logic devices (PLDs), field programmable gate array (FPGA), controller, microcontroller, microprocessor or other electronic elements for performing the guard period determination method described in any of the above examples.

In an example, a non-transitory computer readable storage medium including instructions, such as the memory 1504 including instructions, is also provided. The above instructions may be executed by the processor 1520 of the device 1500 to complete the guard period determination method. For example, the non-transitory computer readable storage medium may be a read-only memory (ROM), a random access memory (RAM), a CD-ROM, a magnetic tape, a floppy disk and an optical data storage device, etc.

After considering the specification and practicing the present disclosure, the persons of skill in the prior art may easily conceive of other implementations of the present disclosure. The present disclosure is intended to cover any variations, uses, modification or adaptations of the present disclosure that follow the general principles thereof and include common knowledge or conventional technical means in the art that are not disclosed in the present disclosure. The specification and examples are considered as exemplary only, with a true scope and spirit of the present disclosure being indicated by the following claims.

It is to be understood that the present disclosure is not limited to the precise construction described herein and shown in the drawings, and that various modifications and changes may be made without departing from the scope thereof. The scope of the disclosure is to be limited only by the appended claims.

It shall be noted that the relational terms such as "first" and "second" used herein are merely intended to distinguish one entity or operation from another entity or operation rather than to require or imply any such actual relation or order existing between these entities or operations. Also, the term "including", "containing" or any variation thereof is intended to encompass non-exclusive inclusion, so that a process, method, article or device including a series of elements includes not only those elements but also other elements not listed explicitly or those elements inherent to such a process, method, article or device. Without more limitations, an element defined by the statement "including a..." shall not be precluded to include additional same elements present in a process, method, article or device including the elements.

The methods and apparatuses of the present disclosure are described above in detail. The principle and implementation of the present disclosure are described herein through specific examples. The description about the embodiments of the present disclosure is merely provided for ease of understanding of the method and core ideas of the present disclosure. Persons of ordinary skill in the art can make variations and modifications to the present disclosure in terms of the specific implementations and application scopes according to the ideas of the present disclosure. Therefore, the specification shall not be construed as a limit to the present disclosure.

## Claims

1. A guard period determination method, performed by a terminal, and comprising:
determining a time domain range corresponding to an uplink subband for uplink transmission in downlink slots; and
determining, based on indication information transmitted by a network device, a guard period before or in the time domain range.

2. The method of claim 1, wherein the guard period is for the terminal to switch from downlink reception to uplink transmission.

3. The method of claim 1, wherein the determining, based on the indication information transmitted by the network device, the guard period before or in the time domain range comprises:
determining, based on the indication information, the guard period in the time domain range.

4. The method of claim 3, wherein the guard period comprises at least one time domain symbol early in the time domain range.

5. The method of claim 1, wherein the determining, based on the indication information transmitted by the network device, the guard period before or in the time domain range comprises:
determining, based on the indication information, the guard period in a downlink time domain resource closest to the time domain range and before the time domain range.

6. The method of claim 5, wherein the guard period comprises at least one time domain symbol, closest to the time domain range, in the downlink time domain resource.

7. The method of claim 1, further comprising:
determining, based on an indication from the network device, a length of the guard period.

8. The method of claim 1, wherein the indication information comprises a time division duplex (TDD) uplink downlink (UL-DL) configuration exclusive to the uplink subband.

9. The method of claim 8, wherein the determining, based on the indication information transmitted by the network device, the guard period in the time domain range comprises:
determining, based on the TDD UL-DL configuration, a time domain symbol structure of at least one downlink slot in which the uplink subband is located; and
determining, based on the time domain symbol structure, at least one flexible time domain symbol in the at least one downlink slot as the guard period.

10. The method of claim 8, wherein the TDD UL-DL configuration comprises at least one of pieces of configuration information:
a time domain period of the uplink subband, a first number of downlink slot in the time domain period, a second number of downlink time domain symbol after the downlink slot in the time domain period, a third number of uplink slot in the time domain period, or a fourth number of uplink time domain symbol in a slot before the earliest uplink slot in the time domain period.

11. The method of claim 10, wherein the determining, based on the indication information transmitted by the network device, the guard period in the time domain range comprises:
based on one or more of the at least one of pieces of configuration information, determining at least one flexible time domain symbol in the downlink slot as the guard period, or determining at least one unconfigured time domain symbol in the downlink slot as the guard period.

12. The method of any one of claims 8 to 11, further comprising:
determining, based on an indication from the network device, a starting slot of at least one downlink slot in which the uplink subband is located.

13. The method of any one of claims 8 to 11, further comprising:
determining, based on the TDD UL-DL configuration, a starting slot of at least one downlink slot in which the uplink subband is located.

14. The method of any one of claims 1 to 11, further comprising:
transmitting to the network device switching capability information, for switching from downlink reception to uplink transmission, of the terminal.

15. The method of any one of claims 1 to 11, further comprising:
transmitting to the network device information related to communication delay from the terminal to the network device.

16. The method of any one of claims 1 to 11, wherein the uplink subband is an uplink subband after a downlink slot or a downlink time domain symbol and adjacent to the downlink slot or the downlink time domain symbol.

17. A guard period indication method, performed by a network device, and comprising:
determining a time domain range, configured for a terminal, corresponding to an uplink subband for uplink transmission in downlink slots; and
transmitting indication information to the terminal, wherein the indication information is configured to instruct the terminal to determine a guard period before or in the time domain range.

18. The method of claim 17, wherein the guard period is for the terminal to switch from downlink reception to uplink transmission.

19. The method of claim 17, wherein the indication information is configured to instruct the terminal to determine the guard period in the time domain range.

20. The method of claim 19, wherein the guard period comprises at least one time domain symbol early in the time domain range.

21. The method of claim 17, wherein the indication information is configured to instruct the terminal to determine the guard period in a downlink time domain resource closest to the time domain range and before the time domain range.

22. The method of claim 21, wherein the guard period comprises at least one time domain symbol, closest to the time domain range, in the downlink time domain resource.

23. The method of claim 17, further comprising:
indicating to the terminal a length of the guard period.

24. The method of claim 17, wherein the indication information comprises a time division duplex (TDD) uplink downlink (UL-DL) configuration exclusive to the uplink subband.

25. The method of claim 24, wherein the TDD UL-DL configuration is configured to configure a time domain symbol structure of at least one downlink slot in which the uplink subband is located, and the time domain symbol structure is for the terminal to determine at least one flexible time domain symbol in the at least one downlink slot as the guard period.

26. The method of claim 24, wherein the TDD UL-DL configuration comprises at least one of pieces of configuration information:
a time domain period of the uplink subband, a first number of downlink slot in the time domain period, a second number of downlink time domain symbol after the downlink slot in the time domain period, a third number of uplink slot in the time domain period, or a fourth number of uplink time domain symbol in a slot before the earliest uplink slot in the time domain period.

27. The method of claim 26, wherein one or more of the at least one of pieces of configuration information is for the terminal to determine at least one flexible time domain symbol in the downlink slot as the guard period, or determine at least one unconfigured time domain symbol in the downlink slot as the guard period.

28. The method of any one of claims 24 to 27, further comprising: indicating to the terminal a starting slot of at least one downlink slot in which the uplink subband is located.

29. The method of any one of claims 24 to 27, wherein the TDD UL-DL configuration is further configured to configure a starting slot of at least one downlink slot in which the uplink subband is located.

30. The method of any one of claims 17 to 27, further comprising:
receiving switching capability information, for switching from downlink reception to uplink transmission, of the terminal transmitted by the terminal; and
determining, based on the switching capability information, a length of the guard period.

31. The method of any one of claims 17 to 27, further comprising:
determining information related to communication delay from the terminal to the network device; and
determining, based on the information related to communication delay, a length of the guard period.

32. The method of any one of claims 17 to 27, wherein the uplink subband is an uplink subband after a downlink slot or a downlink time domain symbol and adjacent to the downlink slot or the downlink time domain symbol.

33. A guard period determination apparatus, being applicable to a terminal, and comprising:
a range determination module, configured to determine a time domain range corresponding to an uplink subband for uplink transmission in downlink slots; and
a period determination module, configured to determine, based on indication information transmitted by a network device, a guard period before or in the time domain range.

34. A guard period indication apparatus, being applicable to a network device, and comprising:
a range determination module, configured to determine a time domain range, configured for a terminal, corresponding to an uplink subband for uplink transmission in downlink slots; and
a period indication module, configured to transmit indication information to the terminal, wherein the indication information is configured to instruct the terminal to determine a guard period before or in the time domain range.

35. A communication device, comprising:
a processor; and
a memory storing computer programs,
wherein the computer programs, when executed by the processor, cause the processor to perform the guard period determination method of any one of claims 1 to 16.

36. A communication device, comprising:
a processor; and
a memory storing computer programs,
wherein the computer programs, when executed by the processor, cause the processor to perform the guard period indication method of any one of claims 17 to 32.

37. A computer-readable storage medium, storing computer programs thereon, wherein the computer programs, when executed by a processor, cause the processor to perform the guard period determination method of any one of claims 1 to 16.

38. A computer-readable storage medium, storing computer programs thereon, wherein the computer programs, when executed by a processor, cause the processor to perform the guard period indication method of any one of claims 17 to 32.
